# FASCICULE DE BREVET EUROPEEN

(11) **EP 0 524 844 B1**
(45) Date de publication et mention de la délivrance du brevet: **03.05.1995**
(21) Numéro de dépôt: 92401740.3
(22) Date de dépôt: 22.06.1992
(51) Int. Cl.: F16F 1/38, B21J 9/02

(54) **Procédé de formage d'une surépaisseur aux extrémités de la douille interne d'une articulation, après moulage et ses applications**
Verfahren zum Bilden einer Überdicke an den Enden des Innenrohrs eines Gelenks nach dem Formen und dessen Anwendungen
Process for building an extra thickness at the ends of the inner tube of a flexible bearing, after molding and its applications

(30) Priorité: 23.07.1991 FR 9109405; 11.12.1991 FR 9115484
(43) Date de publication de la demande: 27.01.1993
(73) Titulaire: CAOUTCHOUC MANUFACTURE ET PLASTIQUES, F-78005 Versailles (FR)
(72) Inventeur: Gautheron, Michel, F-58000 Nenvers (FR)
(74) Mandataire: Peuscet, Jacques

(56) Documents cités:
- EP-A- 0 014 570
- CH-A- 394 723
- DE-U- 7 327 342
- PATENT ABSTRACTS OF JAPAN vol. 9, no. 77 (M-369)(1800) 6 Avril 1985 & JPA-59 206 136 (MUSASHI SEIMITSU ET AL) 21 Novembre 1984
- MACHINE DESIGN vol. 46, no. 1, 10 Janvier 1974, USA pages 107 - 109; DREGER:'noiseless cold forging'
- Patent Abstracts of Japan vol.11, no.98 (M-575)(2545) 27 Mars 1987 & JP-A-61 248 930 (Yamashita Rubber K.K.) 6 Novembre 1986

## Description

L'invention concerne le domaine de la fabrication des articulations élastiques utilisant la liaison d'une bague en composition élastomérique à deux armatures rigides coaxiales dont l'une sera, au montage, prise en chape sur un axe fixe, autour duquel tourillonne l'autre armature. Le procédé de fabrication applique à ladite armature, destinée à être prise en chape, une mise en forme, par déformation de matière à froid, qui assure l'amélioration de sa résistance à l'écrasement axial lors du boulonnage par l'axe de cette chape.

La réalisation connue des articulations élastiques cylindriques met en oeuvre deux types de procédés assurant la liaison de la bague élastique entre deux douilles tubulaires rigides coaxiales.

Le premier procédé consiste en un assemblage, sous forte précontrainte, d'une bague d'épaisseur sensiblement constante, réalisée en caoutchouc vulcanisé, introduite par force entre deux éléments rigides nécessairement cylindriques, au moyen d'une presse d'emmanchement, comme décrit dans le document FR 1.119.841 de SILENTBLOC.

Par ailleurs, le procédé dit d'adhérisation, assurant une liaison intime de type physico-chimique aux bagues rigides, métalliques ou plastiques, qui l'entourent lors de la réticulation - adhérisation simultanée au moulage d'une bague élastomérique - est devenu le moyen le plus répandu de réalisation de tous types d'articulations. Pour les manchons cylindriques les plus simples, destinés au débattement angulaire par exemple d'un bras de suspension de véhicule, ce procédé est évoqué dans le document FR 827.020 de METALASTIK.

Il est d'usage courant d'améliorer la tenue à la fatigue alternative de l'élastomère par une précompression de la bague élastique grâce au gonflement ou dudgeonnage de la douille interne, ou bien par le rétreint de la bague externe, comme décrit par exemple dans le document FR 1.415.871 de METALASTIK qui s'applique à des bagues cylindriques ou de surface partiellement sphérique.

Dans l'une et l'autre famille de procédés de réalisation, la bague élastique se trouve en état de compression multidirectionnelle importante et les seules zones où une défaillance peut se produire sont les surfaces libres, en contact avec l'atmosphère sur les bords latéraux du manchon élastique. Une forme appropriée est donnée à cette surface libre, pour résister aux déformations de rotation ainsi qu'aux débattements en translation dus à l'élasticité axiale.
Les deux bagues coaxiales font l'objet des allègements recherchés dans l'automobile. Pour ce faire, la bague extérieure est parfois réalisée en matière plastique. En ce qui concerne la douille interne, restée métallique et prise en chape par serrage axial lors du boulonnage sur le chassis ou le berceau, ce qui la rend solidaire de l'axe d'articulation du bras considéré, elle ne se contente plus d'être un simple tube métallique mince le plus souvent en acier ordinaire étiré.

Le constructeur d'automobiles, qui applique le serrage sur une vis en général en acier de meilleure qualité que celle de la douille, aura tendance à donner à celle-ci une section annulaire supérieure à celle de la vis qui passe dans son alésage ; ceci conduit à un rapport entre les diamètres externe et interne de cette douille métallique au moins égal à racine de deux.
L'étirage par ailleurs apporte également un écrouissage de la matière de ce tube, les deux composants de la prise en chape se trouvant alors plus résistants que la chape, elle-même.
Ainsi, les premières déformations lors du serrage affectent le flan de tôle qui vient se plaquer sur les plans extrêmes de la douille interne, sollicités par ailleurs par la tête de la vis et l'écrou sur la face externe de ce flan.

Les sollicitations dynamiques exercées par l'articulation matent, alors au cours du temps, cette surface d'appui sur laquelle se concentrent donc les risques de desserrage. La solution la plus économique consiste à accroître la surface d'appui sur les plans extrêmes de la douille interne sans avoir à améliorer la qualité de la matière.

Pour éviter d'augmenter inutilement la masse de la douille interne, mais surtout pour laisser, dans la partie utile fonctionnelle, la place pour la plus grande épaisseur possible de la composition élastomérique - qui assure la possibilité de déformation de la pièce ainsi que la fonction antivibratoire qui lui est demandée, - la douille interne devient un tube d'épaisseur variable modulée. Elle présente donc une surépaisseur sur les faces latérales d'appui et une épaisseur plus faible et constante dans la partie centrale, ou suit une loi optimisée de progression de l'épaisseur sur l'ensemble de la pièce, pour assurer la meilleure résistance au flambage, lors du serrage axial.

Pour la réalisation de telles douilles, le sertissage d'une rondelle additionnelle (CH-A-394 723), ou le décolletage avec enlèvement de copeaux, sont les procédés usuels. Ils présentent l'inconvénient d'un coût élevé. La déformation de matière est un moyen plus avantageux mais compliqué par l'existence de l'alésage interne. La déformation à froid, en rotation, par fluage de matière est appelée de façon générale le fluotournage. Des exemples de dispositifs de fluotournage sont donnés dans les documents FR 2.100.579 de MESSERSCHMITT-BÖLKOW-BLOHM - qui décrit un porte-molettes fixe et un entraînement hydromécanique - et FR 2.389.428 de l'Etat Français, décrivant le fluotournage de pièces coniques grâce à une seule molette équilibrée par la bride servant de support au flan.
Une machine utilisant une bouterolle à mouvement conique autour de la zone où se concentre la déformation de matière, est décrite dans le document US 3,768,289 de VSI CORPORATION.

Elle est destinée au formage de têtes de rivets et non à celui de pièces creuses.

L'objectif de l'invention est de permettre le formage, après moulage, d'au moins une des faces d'extrémité de la douille interne rigide d'une pièce composite, par déformations plastiques à froid du métal en développant un procédé de déformation radiale locale, à pression ponctuelle, de manière rotative et continue, appliqué aux extrémités de l'alésage, en phase de finition, de façon compatible avec les composants qui entourent ladite douille interne rigide.

L'invention est relative à un procédé de formage, après moulage, d'une au moins des extrémités de la douille interne rigide d'une articulation élastique dont la fonction est assurée par déformation d'un manchon élastique, cylindrique ou sensiblement cylindrique, en composition élastomérique intimement liée à ladite douille interne rigide et à une bague extérieure qui lui est coaxiale.
L'invention concerne également une articulation élastique résultant du procédé de formage, après moulage, de l'une au moins des extrémités de sa douille interne rigide.

Le procédé selon l'invention est caractérisé en ce qu'une surépaisseur annulaire est formée à l'une au moins des extrémités de ladite douille interne rigide, la zone à déformer de ladite douille interne rigide étant enfermée dans deux demi-matrices qui lui imposent la forme extérieure. La force provoquant un fluage local est appliquée de façon tangente par une bouterolle basculant autour d'un axe oblique de trajectoire conique de faible angle, axe qui tourne autour de l'axe de révolution de l'articulation élastique, et en ce que la réaction est exercée sur la douille interne rigide, par sa face plane brute d'extrémité opposée, sans solliciter notablement la composition élastomérique constituant le manchon élastique.

Une variante du procédé de formage selon l'invention est caractérisée en ce que la forme de l'une au moins des faces planes d'extrémité de ladite douille interne rigide est complétée par au moins un élément saillant constitué d'une nervure cylindrique saillante ou de cannelures radiales en relief, traces d'empreintes circulaires ou radiales portées en creux par la face faiblement conique de la bouterolle, pour améliorer la tenue aux efforts radiaux ou de rotation sur ladite face plane d'appui lors de la prise en chape de la douille interne rigide après le montage.

L'articulation élastique selon l'invention est caractérisée en ce que sa douille interne rigide comporte, à l'une au moins de ses extrémités, des surépaisseurs annulaires réalisées conformément au procédé de formage après moulage, objet de l'invention.

Dans une variante d'articulation élastique selon l'invention, possédant une armature intermédiaire, le diamètre extérieur desdites surépaisseurs annulaires excède le diamètre de l'armature intermédiaire.

Dans une autre variante d'articulation élastique selon l'invention, l'une au moins des faces planes d'extrémités de la douille interne rigide comporte au moins un élément saillant, tel qu'une nervure cylindrique saillante ou des cannelures radiales en relief .

L'invention sera mieux comprise à la lecture de la description accompagnant les dessins dans lesquels :
- la figure 1 est une coupe axiale d'une articulation élastique réalisée selon l'art antérieur ;
- la figure 2 est une coupe axiale d'une articulation élastique selon l'invention, finie, telle que souhaitée par le constructeur d'automobiles ;
- la figure 3 est une coupe axiale de la même articulation élastique, telle qu'elle est issue de moulage ;
- la figure 4 indique, en coupe axiale d'axe vertical, les positions relatives de l'outil et de l'articulation élastique au cours de l'opération de formage ;
- la figure 5 est une coupe axiale partielle d'une articulation élastique façonnée par le bouterollage et présentant, sur une de ses faces planes d'extrémité, un élément saillant ;
- la figure 6 expose les formes réalisables à la demande sur les parties extrêmes de douilles internes :
   la vue 6a la forme la plus courante demandée,
   la vue 6b la forme avec refoulement vers l'intérieur,
   la vue 6c un compromis entre les extrêmes.
- la figure 7 est une vue en bout de la face plane d'extrémité de la douille interne, complétée par deux nervures cylindriques saillantes constituant l'élément saillant ;
- la figure 8 est une vue en bout de la même face plane d'extrémité garnie de cannelures constituant une variante de l'élément saillant ;
- les figures 9a et 9b sont la coupe et la vue en bout d'une solution combinant les deux variantes précédentes.

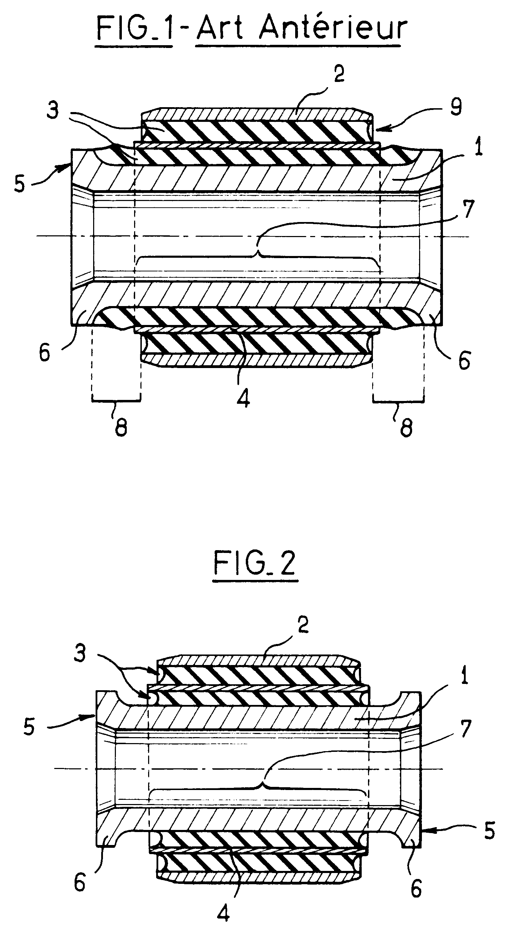

La figure 1 est une coupe axiale d'une articulation élastique réalisée selon l'art antérieur. La douille interne rigide (1) doit être, pour satisfaire les besoins des constructeurs, réalisée en forme de tube métallique d'épaisseur variable, coaxiale à une bague extérieure (2) métallique ou réalisée en matière plastique. Le manchon élastique (3) est intimement lié, au cours de sa vulcanisation en moule fermé sous pression et température contrôlées, à la douille interne rigide (1) d'une part et à la bague extérieure (2) d'autre part, par leurs faces en regard.

Facultativement, une armature intermédiaire (4), en tube d'acier mince qui doit bien sûr passer par dessus la douille interne rigide (1) à l'assemblage, accroit essentiellement la rigidité radiale de l'articulation élastique sans interférer notablement sur la rigidité de torsion ni sur l'élasticité selon l'axe de l'articulation élastique.

Afin d'augmenter la surface d'appui sur les faces planes (5) d'extrémité, la douille interne rigide (1) présente deux surépaisseurs annulaires (6) par rapport à la partie centrale (7), extérieurement cylindrique par sa face en regard du manchon élastique (3). Afin de réaliser un moulage aisé de haute productivité, ledit manchon élastique (3) voit ses parties extrêmes (8) moulées nécessairement de façon cylindrique dans le prolongement du diamètre extérieur des surépaisseurs annulaires (6), les deux parties de moule qui forment les faces latérales (9) - et par où est injectée la matière du manchon élastique (3) - présentent donc, dans cette région, une dépouille minime, de forme pratiquement cylindrique, pour pouvoir être éloignées l'une de l'autre par déplacement axial lors de l'ouverture du moule et de l'extraction des pièces.

L'amélioration de la tenue en fatigue alternée étant pratiquement toujours réalisée par précontrainte de la composition élastomérique du manchon élastique (3), un rétreint par machine à chocs, ou bien souvent un simple passage en filière, assure la réduction diamétrale de la bague extérieure (2).
De la même façon, lorsqu'il existe une armature intermédiaire (4), noyée au sein de la composition élastomérique et, par conséquent, sur laquelle aucune déformation ne peut être appliquée, la partie intérieure du manchon élastique (3), c'est à dire celle comprise entre la douille interne rigide (1) et ladite armature intermédiaire (4), reçoit sa précontrainte par le passage d'une olive, ou dudgeonnage, qui augmente tous les diamètres - interne et externe - de la douille interne rigide (1) et de ses surépaisseurs annulaires (6). Du fait de l'incompressibilité volumétrique du manchon élastique (3), il en résulte un léger gonflement des parties extrêmes (8) réalisées cylindriques.

Lors des déformations fonctionnelles, en particulier lorsqu'il est fait usage de l'élasticité axiale pour permettre des débattements dynamiques de plusieurs millimètres selon l'axe de la pièce, la forme cylindrique, et à plus forte raison ce léger gonflement résultant s'avèrent un inconvénient majeur.

La zone constituée des parties extrêmes (8) se trouve être la plus sollicitée de la composition élastomérique et le constructeur utilisant ce type de pièce demande au fabricant de réaliser un dégagement derrière les surépaisseurs annulaires (6), exempt de toute matière, pour permettre le débattement de l'armature intermédiaire (4) aussi bien sous des efforts axiaux que lors des déformations dites en conique. Un usinage de reprise, après le moulage, ou le positionnement d'une bague amovible rendant le moule et l'opération de démoulage très complexes sont les solutions jusqu'à présent utilisées ; l'invention proposée apporte une solution avantageuse pour satisfaire ce besoin.

La figure 2 est une coupe axiale de l'articulation élastique finie, réalisée selon le procédé objet de l'invention et présentant la forme souhaitée par le constructeur d'automobiles.
Toujours de forme de révolution autour de son axe, la pièce présente les mêmes apparences que celle selon l'art antérieur décrite en figure 1.

La bague extérieure (2) est coaxiale à la douille interne rigide (1) à laquelle elle est reliée par le manchon élastique (3), facultativement fretté par une armature intermédiaire (4) qui en accroit la rigidité radiale.
Les surépaisseurs annulaires (6), de part et d'autre de la partie centrale (7), essentiellement cylindrique, permettent de satisfaire l'accroissement de surface d'appui souhaitée, grâce à l'existence des faces planes (5) d'extrémité.

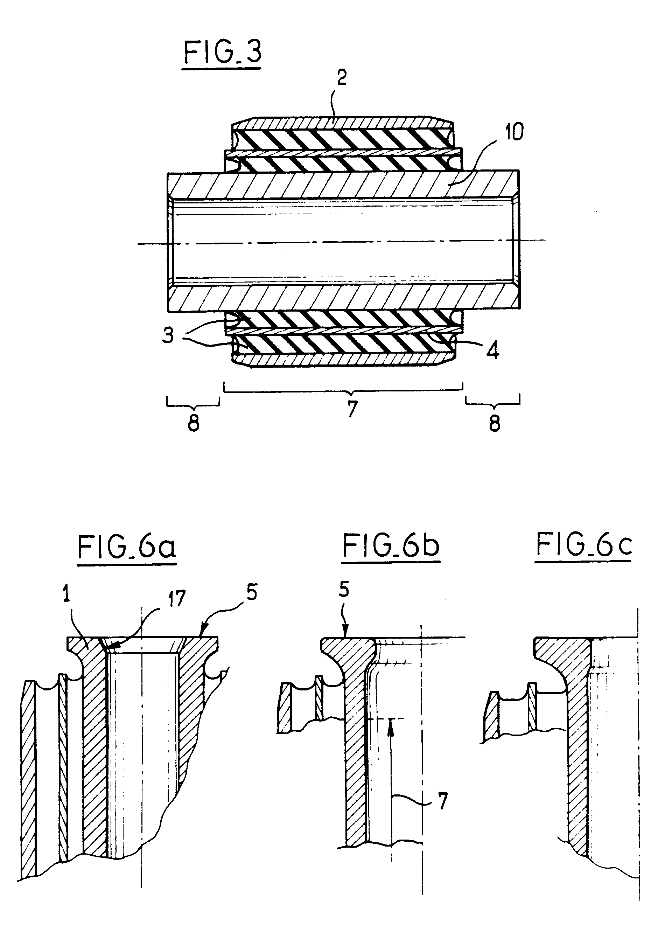

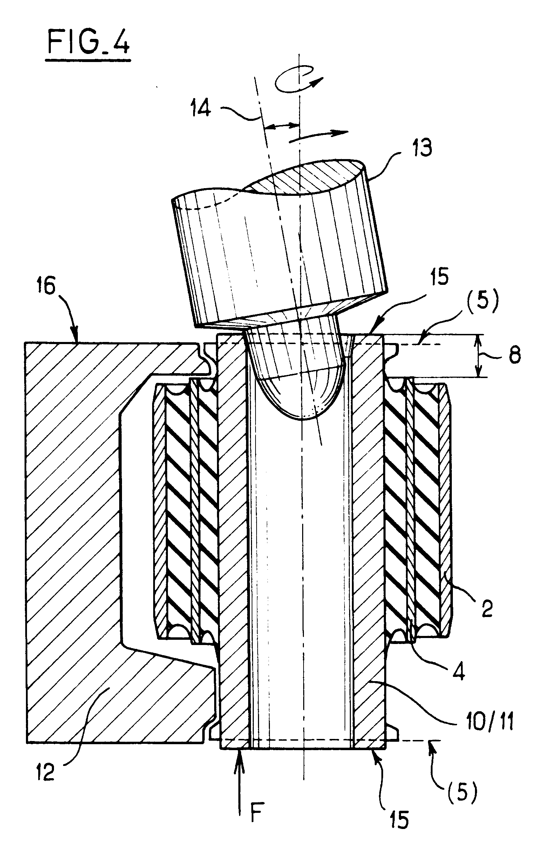

Contrairement aux techniques connues, le procédé de formage objet de l'invention permet de donner aux surépaisseurs annulaires (6) un diamètre extérieur supérieur à celui de l'armature intermédiaire (4), disposition qui peut s'avérer avantageuse lorsque sont recherchés des facteurs de forme élevés. L'obtention directe de ces formes est possible par déformation de la matière de la douille interne rigide (1) à partir de la forme d'une ébauche moulée telle que décrite par la figure 3.

La figure 3 est une coupe axiale de l'articulation élastique telle qu'elle est issue de moulage, avant les opérations de finition.
Elle ne diffère des deux descriptions précédentes que par la douille interne brute (10), qui se présente de façon cylindrique sur la totalité de sa longueur, les sections droites restant approximativement à des diamètres tant interne qu'externe voisins de ceux de la partie centrale (7).
Plus précisément ces deux derniers diamètres sont légèrement accrus par l'opération de dudgeonnage, dans l'hypothèse où il existe une armature intermédiaire (4).

En effet, le dudgeonnage applique une précontrainte par la réduction de l'épaisseur radiale du manchon élastique (3).
En l'absence de ladite armature intermédiaire (4) qui, noyée dans la composition élastomérique, ne peut changer de cotes, le rétreint exercé sur la bague extérieure (2) suffit à appliquer la précontrainte voulue.

Avec ou sans dudgeonnage ultérieur, l'articulation élastique présente, lors du moulage, des parties extrêmes (8) cylindriques qui permettent de simplifier le moule de réalisation ; celui-ci s'ouvre par déplacement axial, grâce à une dépouille pratiquement nulle, puisqu'elle ne concerne qu'une mince couche de composition élastomérique qui viendrait revêtir éventuellement la surface cylindrique de la douille interne brute (10) sur ses parties extrêmes (8), pour la protéger contre les risques d'oxydation.

La figure 4 indique, en coupe axiale d'axe vertical, les positions relatives de l'outil et de l'articulation élastique, lors du formage par fluage à froid de la matière.
L'articulation élastique ayant, après moulage, subi le rétreint de la bague extérieure (2) et, facultativement, le dudgeonnage qui modifie les diamètres interne et externe de la douille interne brute (10), les portant aux valeurs de la douille interne dudgeonnée (11), est enfermée entre deux demi-matrices (12). Afin d'exercer la déformation plastique du métal, lesdites demi-matrices prennent localement appui sur les parties extrêmes (8), cylindriques, de ladite douille interne dudgeonnée (11).

La machine, dérivée d'une machine de rivetage, comporte une bouterolle (13), de révolution, et montée tournant librement autour d'un axe oblique (14). La section droite de l'outil est conçue de façon à venir tangenter, ponctuellement, la face plane brute (15) découpée sur le bout de la douille interne dudgeonnée (11). La courte ligne d'appui qui en résulte se déplace dans le plan contenant l'axe oblique (14) lorsqu'il tourne autour de l'axe vertical de la machine, la bouterolle (13), libre en rotation, roule donc sans glisser sur sa face d'appui tangent.

Des pressions énormes peuvent être exercées localement, sans fourniture notable d'énergie, à la seule condition de les contrebouter par une réaction (F) en appui sur la face plane brute (15) opposée. Le formage d'une éventuelle seconde surépaisseur, à l'autre extrémité de la douille interne dudgeonnée (11) s'opère, après retournement, par appui sur la première face finie. Pour ce faire, les efforts importants exercés au cours de la déformation plastique du métal, ne passent donc pas à travers la grande flexibilité axiale de l'articulation élastique.
Les demi-matrices (12) enferment, de façon précise, chaque partie extrême (8) et imposent donc, sans exercer de réaction axiale, à la matière, en général un acier mi-dur, de la douille interne dudgeonnée (11), la forme souhaitée.
Un perfectionnement propre à la machine est de présenter une inclinaison de l'axe oblique (14) variable élastiquement. Sous l'effet de la réaction, l'axe oblique (14) se redresse et la conicité résultante de la ligne d'appui ajoute ainsi une composante de force, exercée vers l'extérieur sur le métal radialement forcé de s'épanouir dans la matrice qui l'entoure. Après ce refoulement de matière, la ligne d'appui tangentiel se redresse et revient se situer dans le plan de la face plane (5) d'extrémité qui se substitue à la face plane brute (15) initiale, mais en retrait de quelques millimètres. La face plane (5) d'extrémité peut avantageusement affleurer la face supérieure (16) des demi-matrices utilisées, la réaction (F) s'exerçant sur la face plane (5) d'extrémité de la douille interne rigide et non sur le plan constituant la face des demi-matrices (12).
L'opération sur la face opposée s'effectue par retournement desdites demi-matrices (12), la réaction F s'exerçant alors sur la première face plane (5) d'extrémité, finie.

La figure 5 décrit une variante du procédé applicable à la face plane (5) d'extrémité qui termine la douille interne rigide (1) d'une articulation élastique pour en améliorer la prise en chape par les flans de tôle sur laquelle l'articulation est serrée, au montage, par boulonnage, ladite variante consistant à munir la face plane (5) d'extrémité de la douille interne rigide (1) d'au moins un élément saillant.

Le fonctionnement de la bouterolle (13) ne s'oppose pas à ce que soit aménagée sa face conique, de faible angularité par rapport à un plan, qui tourne tangentiellement sans frictions selon une courte ligne d'appui sur le plan de la face plane brute (15) devenant, sous l'effet de la déformation, face plane (5) d'extrémité, en léger retrait. La ligne d'appui tourne dans un plan défini par l'axe oblique (14) mais sans frictions, circonférentielles ou radiales, engendrant elle-même un plan où peut rester marquée en relief la trace des empreintes correspondant à celles portées en creux par ladite bouterolle (13) pour former au moins un élément saillant.

La figure 6 expose les formes réalisables à la demande sur les parties extrêmes de douilles internes rigides (1).

La vue 6a montre la forme la plus courante demandée par les constructeurs d'automobiles. La douille interne rigide (1) présente un chanfrein (17) fort opportun pour faciliter l'introduction d'une vis d'assemblage. Sa présence a pour effet, tout en augmentant la surface d'appui sur la face plane (5) d'extrémité , ce qui est l'objectif, de maintenir une épaisseur sensiblement constante de ladite douille interne rigide (1). La matière est ainsi sollicitée dans les meilleures conditions pour repousser le risque de flambage, lors du serrage axial.

La vue 6b montre une forme où la face plane (5) d'extrémité voit sa surface accrue, tant vers l'extérieur que vers l'alésage, par refoulement de matière dans la direction de l'axe. La réduction de diamètre de l'alésage ainsi créée reste maîtrisable, pour respecter le passage d'une vis dans l'alésage, grâce à la forme donnée à l'extrémité de la bouterolle engagée dans ledit alésage.
La forme résultante est un moyen d'optimiser la tenue au flambage de la forme tubulaire de la douille interne rigide (1), dans l'hypothèse où la partie centrale (7) ne reste pas rigoureusement cylindrique, mais d'épaisseur variable modulée en vue de reculer le risque de flambage.

La vue 6c montre la forme de compromis entre les deux formes extrêmes, sans doute la plus souhaitable pour satisfaire l'objectif. Rien n'empêche en effet un ordre inverse des opérations de finition, dans lequel le dudgeonnage vient s'exercer après le formage des surépaisseurs annulaires (6) ayant les formes représentées par la vue 6b.
Le passage cylindrique nécessaire à la vis d'assemblage est alors rétabli après l'opération de dudgeonnage ultérieur sur ladite surépaisseur annulaire.

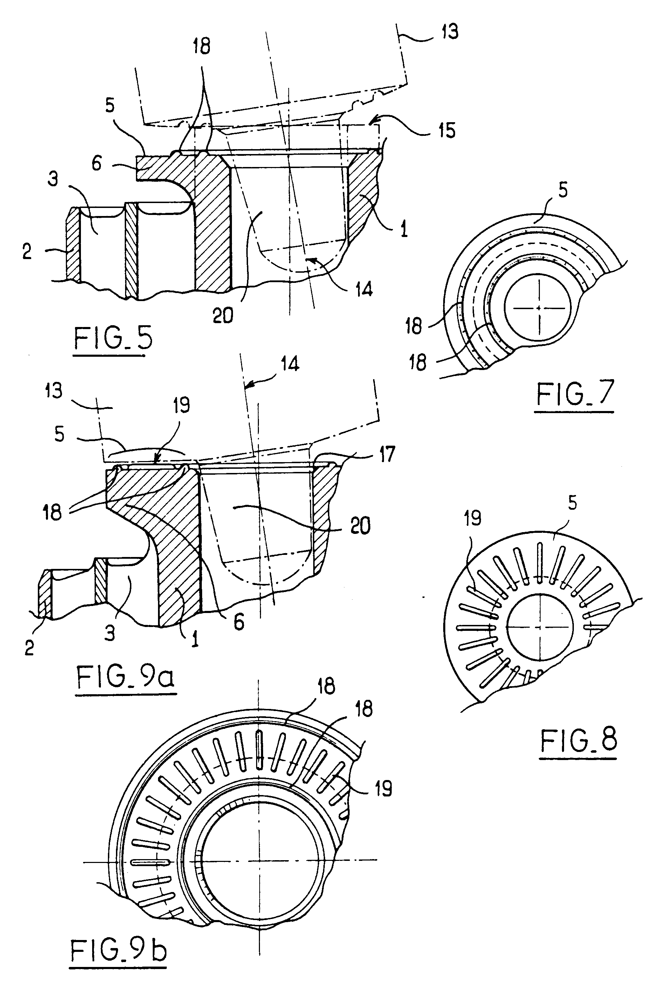

Comme la figure 5, la figure 7 montre, en coupe axiale et en bout, le cas où un élément saillant porté par la face d'extrémité de l'armature interne rigide (1) munie d'une surépaisseur annulaire (6) est constitué de deux petites nervures cylindriques saillantes (18) marquées en relief par rapport à la face plane (5) d'extrémité de ladite douille interne rigide (1). L'intersection de l'axe de révolution de l'articulation élastique (et de la machine) avec l'axe oblique (14) conserve, dans cette rotation, un même centre à l'empreinte marquée sur la bouterolle (13) et à la trace correspondante. De ce fait, ladite face plane (5) d'extrémité reçoit au moins une nervure cylindrique saillante (18) et, préférentiellement, deux comme représenté. Leur section est, par exemple triangulaire, à sommet et raccordements arrondis et la surépaisseur déborde au plus de 0,5 mm par rapport à la face plane (5) d'extrémité.

Lors de la prise en chape ultérieure, au cours du montage, un serrage élastique décrivant une course d'au moins cette valeur viendra imprimer la trace de cette nervure cylindrique saillante (18) dans le flan de tôle en regard, dont la dureté est généralement inférieure à celle de la douille interne rigide (1).

Ainsi, les efforts radiaux appliqués à l'articulation élastique, qui seraient capables de provoquer, en'fatigue répétitive, un déplacement de l'axe avec matage dans son alésage, sont-ils beaucoup mieux contenus, même en cas de serrage défaillant du boulonnage axial, par la localisation des contraintes à la suite de cette création d'appuis résistant aux efforts parallèles à la face.

Des débattements exagérés exceptionnels, en rotation, permettent encore, sans modification de la géométrie du train de suspension considéré, un rééquilibrage des contraintes, si besoin est, dans l'articulation élastique, lorsqu'elle recentre son orientation sur une valeur moyenne par rapport aux débattements dynamiques, grâce à un léger glissement desdites nervures cylindriques saillantes (18) dans leur trace sur le flan de tôle.

La figure 8 prévoit, au contraire, le cas où le constructeur cherche à s'opposer à toute rotation de l'articulation élastique prise en chape par sa douille interne rigide (1) lorsque le serrage axial devient défaillant. L'élément saillant est alors constitué de cannelures radiales en relief (19) disposées selon des génératrices. Elles sont, dans ce but, marquées sur le métal de la douille interne rigide (1) par des empreintes en creux portées par la face faiblement conique de la bouterolle (13). Ces empreintes s'impriment lors de la rotation de la courte ligne d'appui dans le plan défini par l'axe oblique (14) qui tourne autour de l'axe géométrique de la pièce.
D'épaisseur 0,3 ou 0,4 mm, ces cannelures radiales en relief (19) sont susceptibles, comme le font les nervures cylindriques saillantes (18), de s'imprimer, lors du serrage axial, au montage, dans le flan de la tôle en regard. La tenue en rotation, tout autant que la résistance aux efforts radiaux, en sont nettement améliorées, même sous faible serrage axial.

Les empreintes des deux types d'élément saillant, figurant en creux sur le métal de grande dûreté de la bouterolle (13), peuvent être obtenues par un meulage au cours de la fabrication de celle-ci et viennent donc en relief sur la face plane (5) d'extrémité de la douille interne rigide (1).

Les figures 9a et 9b sont, dans deux plans perpendiculaires, une coupe axiale et la vue en bout d'une combinaison selon les deux variantes qui viennent d'être décrites.

Au moins une nervure cylindrique saillante (18), ou, préférentiellement deux, comme illustré, concentriques, ont leur centre commun sur l'axe de la douille interne rigide (1) et, en outre, dans la partie annulaire située entre elles, sont marquées des cannelures radiales en relief (19) qui reproduisent l'empreinte en creux réalisée sur la face quasi-plane de la bouterolle (13). Cette dernière est, dans tous les cas, centrée et maintenue sur l'axe de l'articulation élastique par l'existence à son extrémité d'un téton faiblement conique (20).

Le mouvement faiblement conique de l'axe oblique (14) fait engendrer, par ledit téton faiblement conique (20) un cylindre qui se confond avec l'alésage de la douille interne rigide (1).

Ainsi, malgré les déformations plastiques de la matière, la perpendicularité dudit cylindre est-elle contrôlée par rapport à la face plane (5) d'extrémité garnie des nervures cylindriques saillantes (18) et des cannelures radiales en relief (19). La nutation du téton faiblement conique (20) dans le cylindre se fait avec de légers pivotements superficiels tout à fait admissibles, réalisant éventuellement un chanfrein (17), utile lors du boulonnage.
Au contraire, la rotation (autour de l'axe de révolution de l'articulation élastique) de la courte ligne d'appui entre la bouterolle (13) et la face plane (5) d'extrémité de la douille interne rigide (1) se fait sans glissements, permettant la reproduction à chaque tour de la trace laissée par les empreintes portées en creux par la bouterolle (13).

Le procédé de formage de la surépaisseur selon l'invention présente l'avantage spécifique de pouvoir s'exercer sur la pièce composite, déjà moulée, sans avoir à exercer de contraintes thermiques ou mécaniques sur le manchon élastique.

Le procédé de formage objet de l'invention permet donc de réaliser sur ladite pièce moulée des dégagements derrière les surépaisseurs annulaires, dégagements fort utiles à une meilleure répartition des sollicitations de la composition élastomérique.
Il permet également la réalisation de surépaisseurs annulaires dont le diamètre extérieur excède le diamètre de l'armature intermédiaire, pour obtenir des facteurs de forme élevés, ce que ne permettaient pas les techniques de l'art antérieur qui nécessitaient l'assemblage des armatures avant le moulage de l'articulation élastique.

La variante du procédé de moulage décrit pour la réalisation d'éléments saillants tels que des nervures cylindriques saillantes ou des cannelures radiales en relief, combine à la déformation de matière, par fluage localisé qui forme la surépaisseur annulaire, une technique similaire à celle du moletage cylindrique.
Il autorise, enfin, la réalisation d'éléments saillants complémentaires sur l'une au moins des faces planes d'extrémité de la douille interne rigide de l'articulation élastique.

Le procédé de formation de surépaisseur annulaire sur l'une au moins des extrémités d'une articulation élastique, seul ou en combinaison avec la formation d'éléments saillants sur la face de ladite extrémité, peut être facilement adapté à différentes longueurs ou différents diamètres de douilles et les demi-matrices sont utilisables pour réaliser toute une gamme d'articulations élastiques utilisant des douilles internes rigides identiques.

Le procédé s'applique à différents types d'articulations élastiques, cylindriques telles que décrites ou non.

D'autres formes d'éléments saillants que celles décrites peuvent être également réalisées avec des outils d'empreintes appropriées. De même, suivant les désirs du constructeur, peut être combinée ou non, sur l'une ou les deux faces planes d'extrémité de la douille interne rigide , la présence de nervures, de cannelures ou de tout autre élément saillant et de toute association résultant de cette conception.

## Revendications

1. Procédé de formage après moulage de l'une au moins des extrémités de la douille interne rigide (1) d'une articulation élastique dont la fonction est assurée par déformation d'un manchon élastique (3), cylindrique ou sensiblement cylindrique, intimement lié à ladite douille interne rigide (1) et à une bague extérieure (2) qui lui est coaxiale, ladite articulation élastique comportant optionnellement une armature intermédiaire (4), noyée au sein de la composition élastomérique qui constitue ledit manchon élastique (3),
caractérisé en ce que
- une surépaisseur annulaire (6) est formée à l'une au moins des extrémités de ladite douille interne rigide (1), la zone à déformer de la douille interne rigide (1) étant enfermée dans des demi-matrices (12) qui lui imposent la forme extérieure, la force provoquant un fluage local de la matière étant appliquée de façon tangente par une bouterolle (13) basculant autour d'un axe oblique (14), de trajectoire conique de faible angle, axe qui tourne autour de l'axe de révolution de ladite articulation élastique,
- et en ce que la réaction est exercée sur la douille interne rigide (1) par sa face plane brute (15) opposée sans solliciter notablement la composition élastomérique constituant le manchon élastique (3).

2. Procédé de formage selon la revendication 1, caractérisé en ce qu'il est appliqué sur une articulation élastique après le dudgeonnage de la douille interne rigide (1) qui augmente ses diamètres interne et externe afin d'exercer une précontrainte par la réduction d'épaisseur du manchon élastique (3).

3. Procédé de formage selon la revendication 1, caractérisé en ce qu'il est appliqué sur une articulation élastique dépourvue d'armature intermédiaire, la précontrainte de la composition élastomérique du manchon élastique (3) étant assurée par un rétreint de la bague extérieure (2), ledit rétreint intervenant avant ou après le formage de l'une au moins des extrémités de la douille interne rigide (1).

4. Procédé de formage selon la revendication 1, caractérisé en ce qu'il est appliquée sur une articulation élastique brute de démoulage, comportant une armature intermédiaire (4) noyée au sein de la composition élastomérique constituant le manchon élastique (3), une opération de dudgeonnage de la douille interne brute (10) se faisant ultérieurement audit formage de l'une au moins des extrémités de la douille interne rigide (1).

5. Procédé de formage selon l'une des revendications 1 à 4, caractérisé en ce que la forme de l'une au moins des faces planes (5) d'extrémité de ladite douille interne rigide (1) est complétée par au moins un élément saillant (18, 19), trace d'empreintes circulaires ou radiales portées en creux par la face faiblement conique de la bouterolle (13), pour améliorer la tenue aux efforts alternés exercés sur ladite face plane (5) d'appui lors de la prise en chape de ladite douille interne rigide (1) après le montage.

6. Procédé de formage selon la revendication 5, caractérisé en ce que l'élément saillant de la face plane (5) d'extrémité de ladite douille interne rigide (1) est constitué par au moins une nervure cylindrique saillante (18), concentrique à l'axe de révolution de l'articulation élastique, réalisée pour améliorer la tenue aux efforts radiaux exercés en service sur ladite face plane (5) d'extrémité de la douille interne rigide (1).

7. Procédé de formage, selon la revendication 5, caractérisé en ce que l'élément saillant de la face plane (5) d'extrémité de ladite douille interne rigide (1) est formé de cannelures radiales en relief (19), de façon à améliorer la tenue aux efforts de rotation exercés sur ladite face plane (5) de la douille interne rigide (1).

8. Procédé de formage selon la revendication 5, caractérisé en ce que la face plane (5) d'extrémité de ladite douille interne rigide (1) porte une combinaison d'au moins une nervure cylindrique saillante (18) et de cannelures radiales en relief (19), pour améliorer la tenue simultanée aux efforts radiaux et de rotation exercés sur ladite face (5) de la douille interne rigide (1).

9. Articulation élastique caractérisée en ce que sa douille interne rigide (1) comporte sur l'une au moins de ses extrémités des surépaisseurs annulaires (6) réalisées conformément au procédé objet des revendications 1 à 4.

10. Articulation élastique selon la revendication 9, caractérisée en ce que sa douille interne rigide (1) comporte sur l'une au moins de ses extrémités des surépaisseurs annulaires (6) dont le diamètre extérieur excède le diamètre de l'armature intermédiaire (4).

11. Articulation élastique selon la revendication 9, caractérisée en ce que sa douille interne rigide (1) comporte sur une au moins de ses extrémités des surépaisseurs annulaires (6) et en ce que l'une au moins des faces planes (5) d'extrémité de ladite douille interne rigide (1) comporte au moins un élément saillant (18), (19) réalisé conformément au procédé objet des revendications 5 à 8.

12. Articulation élastique selon la revendication 11, caractérisée en ce que l' élément saillant porté par la face plane (5) d'extrémité de la douille interne rigide (1) est constitué par au moins une nervure cylindrique saillante (18), concentrique à l'axe de révolution de l'articulation élastique.

13. Articulation élastique selon la revendication 11, caractérisée en ce que l' élément saillant porté par la face plane (5) d'extrémité de la douille interne rigide (1) est formé de cannelures radiales en relief (19).

## Claims

1. Method of shaping, after moulding at least one of the end of the inner rigid casing (1), an elastic joint the working of which is ensured by deforming a cylindrical or fairly cylindrical elastic sleeve (3), closely connected to the said rigid inner casing (1) and to an outer ring (2) which itself is coaxial, the said elastic joint comprising optionally an intermediate armature (4) embedded within the elastomeric compound which constitutes the said elastic sleeve (3), characterised in that
- an extra thick annular part (6) is formed at at least one of the ends of the said rigid inner casing (1), the area of the rigid inner casing (1) to be deformed, being enclosed within demi-matrices (12) which give it the outer shape, the force inducing local extrusion of the material being applied in a tangent way by means of a rivet-snap (13) rotating around an oblique axis (14), of conical trajectory of low angle, axis which turns around the axis of revolution of the said elastic joint,
- in that the reaction is exerted on the rigid inner casing (1) by its opposite rough flat surface (15) without notably attracting the elastomeric compound forming the elastic sleeve (3).

2. Method of shaping according to claim 1, characterised in that it is applied on an elastic joint after expanding the inner rigid casing (1) which increases its inner and outer diameters so as to exert a pre-constraint by reducing the thickness of the elastic sleeve (3).

3. Method of shaping according to claim 1, characterised in that it is applied to an elastic joint provided with an intermediate armature, the pre-constraint of the elastomeric compound of the elastic sleeve (3) being ensured by a restraint of the outer ring (2), the said restraint intervening before or after the shaping of at least one of the ends of the inner rigid casing (1).

4. Method of shaping according to claim 1, characterised in that it is applied to a rough elastic stripping joint, comprising an intermediate armature (4) embedded within the elastomeric compound forming the elastic sleeve (3), an expansion operation of the rough inner casing (10) occurring subsequent to the said shaping of at least one of the ends of the rigid inner casing (1).

5. Method of shaping according to one of claims 1 to 4, characterised in that the shape of at least one of the flat end surfaces (5) of the said rigid inner casing (1) is completed by at least one salient element (18,19) marked with circular or radial imprints sunk by the slightly conical surface of the rivet-snap, in order to improve the hold on the alternate strains exerted on the said flat support face (5) at the time of covering the said rigid inner casing (1) after assembly.

6. Method of shaping according to claim 5, characterised in that the salient element of the flat end surface (5) of the said rigid inner casing (1) is formed by at least one projecting cylindrical flange (18), concentric to the axis of revolution of the elastic joint, effected in order to improve the hold on the radial stresses exerted in service on the said flat end surface (5) of the rigid inner casing (1).

7. Method of shaping, according to claim 5, characterised in that the salient element of the flat end surface (5) of the said rigid inner casing (1) is formed by grooves radial in relief (19) so as to improve the hold on the rotation stresses exerted on the said flat surface (5) of the rigid inner casing (1).

8. Method of shaping according to claim 5, characterised in that the flat end surface (5) of the said rigid inner casing (1) supports a combination of at least one projecting cylindrical flange (18) and grooves radial in relief (19) in order to improve the simultaneous holding of the radial and rotation stresses exerted on the said face (5) of the rigid inner casing (1).

9. Elastic joint characterised in that its rigid inner casing (1) comprises extra thick annular parts (6) effected in accordance with the method object of claims 1 to 4, on at least one of its ends.

10. Elastic joint according to claim 9, characterised in that its rigid inner casing (1) comprises extra thick annular parts (6) on at least one of its ends, the outer diameter of which exceeds the diameter of the intermediate armature (4).

11. Elastic joint according to claim 9, characterised in that its rigid inner casing (1) comprises extra thick annular parts (6) on at least one of its ends and in that one at least of the flat end surfaces (5) of the said rigid inner casing (1) comprises at least one salient element (18), (19) effected in accordance with the method object of claims 5 to 8.

12. Elastic joint according to claim 11, characterised in that the salient element supported by the flat end surface (5) of the rigid inner casing (1) is formed by at least one projecting cylindrical flange (18) concentric to the axis of revolution of the elastic joint.

13. Elastic joint according to claim 11, characterised in that the salient element supported by the flat end surface (5) of the rigid inner casing (1) is formed by grooves radial in relief (19).

## Patentansprüche

1. Verfahren zum Umformen mindestens eines der Enden der starren Innenhülse (1) eines elastischen Gelenkes nach dessen Herstellung durch Formguß,
wobei die Funktion des elastischen Gelenkes durch elastische Verformung einer zylindrischen oder im wesentlichen zylindrischen elastischen Muffe (3) erfolgt, die innig mit der starren Innenhülse (1) und einem hierzu koaxialen Außenring (2) verbunden ist, und wobei das elastische Gelenk einen Zwischenbeschlag (4) aufweisen kann, der in die Elastomerzusammensetzung eingebettet ist, aus der die elastische Muffe (3) besteht, dadurch gekennzeichnet, daß
- zumindest an einem der Enden der starren Innenhülse (1) ein Ringwulst (6) ausgebildet wird, wobei der umzuformende Bereich der starren Innenhülse (1) in ihr die Außenform aufzwingende Halbmatrizen (12) eingeschlossen wird und die ein lokales Fließen des Materials hervorvorrufende Kraft tangential durch einen Formkopf (13) ausgeübt wird, der sich um eine geneigte Achse (14) bewegt, die selbst bei ihrer Drehbewegung um die Achse der Rotationssymmetrie des elastischen Gelenkes eine konische Bewegungsbahn kleinen Öffnungswinkels beschreibt,
- und daß, die Wirkkraft auf die starre Innenhülse (1) an deren gegenübenliegender ebener und unbearbeiteter Endfläche (15) angreift, ohne die Elastomerzusammensetzung wesentlich zu beanspruchen, aus der die elastische Muffe (3) besteht.

2. Umform-Verfahren nach Anspruch 1, dadurch gekennzeichnet, daß es auf ein elastisches Gelenk angewendet wird, bei dem zuvor die starre Innenhülse (1) einem Rohrwalzarbeitsgang zur Vergrößerung ihres Innen- und Außendurchmessers zum Zwecke der Vorspannung durch Verminderung der Wandstärke der elastischen Muffe (3) unterworfen wurde.

3. Umform-Verfahren nach Anspruch 1, dadurch gekennzeichnet, daß das keinen Zwischenbeschlag aufweisende elastische Gelenk zum Zwecke der Vorspannung der Elastomerzusammensetzung der elastischen Muffe (3) eine Durchmesserverminderung des Außenringes (2) erfährt, die vor oder nach der Umformung mindestens eines der Enden der starren Innenhülse (1) erfolgt.

4. Umform-Verfahren nach Anspruch 1, dadurch gekennzeichnet, daß ein frisch ausgeformtes elastisches Gelenk mit einem in die Elastomerzusamensetzung eingebetteten Zwischenbeschlag (4) umgeformt wird, die die elastische Muffe (3) bildet, wobei ein Rohrwalzarbeitsgang der rohen Innenhülse (10) dem Umformarbeitsgang mindestens eines der Enden der starren Innenhülse (1) nachgeschaltet wird.

5. Umform-Verfahren nach einem der Ansprüche 1 bis 4, dadurch gekennzeichnet, daß zumindest auf einer der ebenen Endflächen (5) der starren Innenhülse (1) zumindest ein Vorsprung (18, 19) ausgebildet wird und zwar als kreisförmige oder radiale Druckspur von am Formkopf (13) auf seiner Fläche geringer Konizität ausgebildeten Hohlformen, um so die Standfestigkeit der als Abstützfläche dienenden ebenen Endfläche (5) gegen Wechselbeanspruchungen zu verbessern, denen die Innenhülse nach ihrer Montage als Gabelgelenk ausgesetzt ist.

6. Umform-Verfahren nach Anspruch 5, dadurch gekennzeichnet, daß der Vorsprung der ebenen Endfläche (5) der starren Innenhülse (1) durch mindestens eine vorstehende Kreisrippe (18) gebildet wird, die zur Achse der Rotatiossymmetrie des elastischen Gelenkes konzentrisch ist und der Verbesserung der Standfestigkeit gegen die ebene Endfläche (5) der starren Innenhülse (1) ausgeübte Radialkräfte dient.

7. Umform-Verfahren nach Anspruch 5, dadurch gekennzeichnet, daß der Vorsprung der ebenen Endfläche (5) der starren Innenhülse (1) durch eine Kannelierung von Radialrippen (19) gebildet wird, die der Verbesserung der Standfestigkeit gegenüber auf die Endfläche (5) der starren Innenhülse (1) ausgeübten Rotationskräfte dient.

8. Umform-Verfahren nach Anspruch 5, dadurch gekennzeichnet, daß die ebene Endfläche (5) der starren Innenhülse (1) mit einer Kombination mindestens einer vorstehenden Kreisrippe (18) mit einer Kannelierung durch Radialrippen (19) versehen wird, um gleichzeitig die Standfestigket gegen Radialkräfte und Rotationskräfte auf die ebene Endfläche (5) der starren Innenhülse (1) zu verbessern.

9. Elastisches Gelenk, dadurch gekennzeichnet, daß seine starre Innenhülse (1) mindestens an einer ihrer Enden Ringwulste (6) einer Ausbildung nach einem Verfahren nach einem der Ansprüche 1 bis 4 aufweist.

10. Elastisches Gelenk nach Anspruch 9, dadurch gekennzeichnet, daß die starre Innenhülse (1) mindestens an einer ihrer Enden Ringwulste (6) aufweist, deren Außendurchmesser den Durchmesser des Zwischenbeschlages (4) übersteigt.

11. Elastisches Gelenk nach Anspruch 9, dadurch gekennzeichnet daß die starre Innenhülse (1) an mindestens einer ihrer Enden Ringwulst (6) aufweist und daß zumindest eine ebene Endfläche (5) der starren Innenhülse (1) zumindest einen Vorsprung (18, 19) aufweist, der nach dem Verfahren nach einem der Ansprüche 5 bis 8 ausgebildet ist.

12. Elastisches Gelenk nach Anspruch 11, dadurch gekennzeichnet, daß der Vorsprung der ebenen Endfläche (5) der starren Innenhülse (1) durch mindestens eine vorstehende Kreisrippe (18) gebildet ist, die zur Achse der Rotationssymmetrie des elastischen Gelenkes konzentrisch ist.

13. Elastisches Gelenk nach Anspruch 11, dadurch gekennzeichnet, daß der Vorsprung der ebenen Endfläche (5) oder starren Innenhülse (1) aus einer Kannelierung durch Radialrippen (19) besteht.
